# EUROPEAN PATENT APPLICATION

(11) **EP 3 955 689 A1**
(43) Date of publication of application: **16.02.2022**
(21) Application number: 20778473.7
(22) Date of filing: 26.03.2020
(51) Int. Cl.: H04W 74/08

(54) **RANDOM ACCESS METHOD AND USER EQUIPMENT**

(30) Priority: 27.03.2019 CN 201910240800
(71) Applicant: Sharp Kabushiki Kaisha, Sakai-shi Osaka 590-8522 (JP); FG INNOVATION COMPANY LIMITED, Hong Kong (CN)
(72) Inventor: ZHANG, Chongming, Shanghai 201206 (CN); LIU, Renmao, Shanghai 201206 (CN); YAMADA, Shohei, Sakai City, Osaka 590-8522 (JP)
(74) Representative: Müller-Boré & Partner Patentanwälte PartG mbB
(86) International application number: PCT/CN2020/081377
(87) International publication number: WO 2020/192729

(57) **Abstract**

A random access method and user equipment. The random access method includes: transmitting, by user equipment (UE), a message A to a base station, wherein the message A includes a preamble and a message A payload; and after completing transmission of the message A, receiving, by the UE, a message B transmitted by the base station as a response message to the message A. The preamble is transmitted on a Physical Random Access Channel (PRACH). The message A payload is packaged into a Medium Access Control Protocol Data Unit (MAC PDU), and is transmitted on a Physical Uplink Shared Channel (PUSCH). When the UE determines a transmission occasion available to the message A, the UE obtains, from a multiplexing and assembly entity, the MAC PDU used for transmission, and stores the MAC PDU in a buffer.

## Description

### TECHNICAL FIELD

The present invention relates to the technical field of radio communications, and in particular, the present invention relates to a random access method and user equipment.

### BACKGROUND

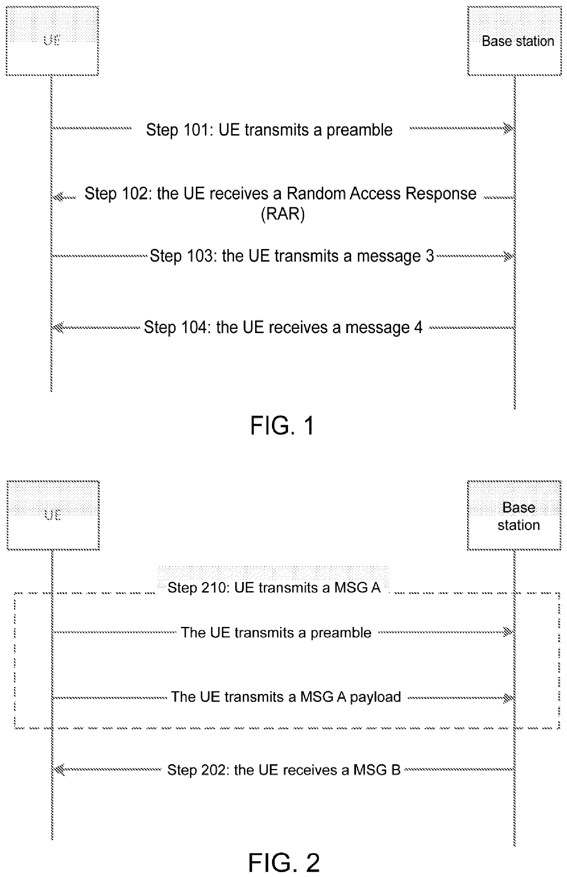

In the prior art, in a random access procedure executed by UE, as shown in FIG. 1, a signaling flow includes 4 steps (step 101 to step 104). Therefore, the above random access procedure can generally be referred to as a four-step random access procedure (hereinafter referred to as a "4-step RA procedure").

In order to reduce the time required for completing the random access procedure, a two-step random access procedure is currently under discussion. As shown in FIG. 2, a signaling flow includes 2 steps, and this random access procedure can generally be referred to as a two-step random access procedure (hereinafter referred to as a "2-step RA procedure"). As shown in FIG. 2, in step 201, the UE transmits a message A (MSG A) to a base station, wherein the MSG A includes a preamble and a MSG A payload.

In the 4-step RA procedure, when obtaining a UL grant in a received RAR, the UE obtains, from a multiplexing and assembly entity, a MAC Protocol Data Unit (MAC PDU) used for transmission, and stores the same in a message 3 buffer. In subsequent step 3, this MAC PDU serves as a MSG 3, and is transmitted to the base station.

In the 2-step RA procedure, a MAC PDU carrying content similar to or the same as the content of the MSG 3 serves as the MSG A payload, and is transmitted to the base station. Therefore, the issue regarding how the UE obtains, during the above 2-step RA procedure executed thereby, the MSG A payload used for transmission needs to be resolved.

### SUMMARY

In order to resolve at least part of the above issues, provided in the present invention are a random access method and user equipment.

According to a first aspect of the present invention, provided is a random access method, comprising: transmitting, by user equipment (UE), a message A to a base station, wherein the message A comprises a preamble and a message A payload; and after completing transmission of the message A, receiving, by the UE, a message B transmitted by the base station as a response message to the message A, wherein the preamble is transmitted on a Physical Random Access Channel (PRACH); the message A payload is packaged into a Medium Access Control Protocol Data Unit (MAC PDU), and is transmitted on a Physical Uplink Shared Channel (PUSCH); and when the UE determines a transmission occasion available to the message A, the UE obtains, from a multiplexing and assembly entity, the MAC PDU used for transmission, and stores the MAC PDU in a buffer.

In the above random access method, the UE determining a transmission occasion available to the message A comprises the following: the UE determines a PUSCH occasion available for transmitting the message A payload; or the UE determines the next available PRACH occasion, wherein the PRACH occasion is used for transmitting the preamble; or the UE selects one of the preambles, and the selected preamble is used for a current random access procedure; or the preamble selected by the UE is associated with the PUSCH or the PUSCH occasion.

In the above random access method, if the UE determines a PUSCH occasion available for transmission, and if the determined PUSCH occasion is the first PUSCH occasion determined by the UE in the current random access procedure, or if the determined PUSCH occasion is used for a new transmission of the message A payload, then the UE obtains, from the multiplexing and assembly entity, the MAC PDU used for transmission.

In the above random access method, if the UE determines the next available PRACH occasion, and if the determined PRACH occasion is the first PRACH occasion determined by the UE in the current random access procedure, or if a PUSCH occasion associated with the determined PRACH occasion is used for a new transmission of the message A payload, then the UE obtains, from the multiplexing and assembly entity, the MAC PDU used for transmission.

In the above random access method, if the UE selects one of the preambles, and if the selected preamble is the first preamble selected in the current random access procedure, or if a PUSCH occasion associated with the selected preamble is used for a new transmission of the message A payload, then the UE obtains, from the multiplexing and assembly entity, the MAC PDU used for transmission.

In the above random access method, the UE instructs a physical layer to transmit the preamble on the selected PRACH occasion, and if the preamble transmitted by the UE is used for the current random access procedure, or if the preamble transmitted by the UE is associated with a PUSCH, or if the PRACH occasion used for transmitting the preamble is associated with a PUSCH, then the UE obtains, from the multiplexing and assembly entity, the MAC PDU used for transmission.

In the above random access method, if the UE determines a PUSCH occasion available for transmission, then the UE uses the PUSCH occasion as an uplink grant (UL grant), and processes the UL grant; if the UE determines the next available PRACH occasion, then the UE uses a PUSCH occasion associated with the PRACH occasion as an uplink grant (UL grant), and processes the UL grant; if the UE selects one of the preambles and the selected preamble is used for the current random access procedure, or if the preamble selected by the UE is associated with the PUSCH or the PUSCH occasion, then the UE uses the PUSCH occasion associated with the preamble as an uplink grant (UL grant), and processes the UL grant.

In the above random access method, if the transmission of the message A payload or the transmission of the message A is unrelated to a Common Control Channel (CCCH), or if the transmission of the message A payload or the transmission of the message A is not performed for a logical channel having a logical channel type of a Common Control Channel (CCCH), then the UE instructs the multiplexing and assembly entity to include a C-RNTI MAC CE in the next transmission.

In the above random access method, the UE stores the MAC PDU in a message 3 buffer or in a buffer used as a non-message 3 buffer; when the UE receives an uplink grant (UL grant), if the UL grant is used for the current random access procedure, or if the UL grant is used for the transmission of the message A payload, or if the UL grant is related to the current random access procedure, then the UE obtains the MAC PDU from the buffer in which the MAC PDU is stored, and transmits the same; when the UE receives an uplink grant (UL grant) in a Random Access Response (RAR), the UE obtains the MAC PDU from the buffer in which the MAC PDU is stored, and transmits the same.

According to a second aspect of the present invention, provided is user equipment, comprising: a processor; and a memory, storing instructions, wherein when run by the processor, the instructions execute the random access method according to the context.

### BRIEF DESCRIPTION OF THE DRAWINGS

FIG. 1 is a schematic sequence diagram illustrating a four-step random access procedure serving as a random access procedure;
FIG. 2 is a schematic sequence diagram illustrating a two-step random access procedure serving as a random access procedure;
FIG. 3 is a detailed sequence diagram illustrating a four-step random access procedure;
FIG. 4 is a detailed sequence diagram illustrating a two-step random access procedure involved in the present invention;
FIG. 5 is a block diagram illustrating user equipment (UE) involved in the present invention;
FIG. 6 is a diagram illustrating a correspondence between a PRACH occasion and a PUSCH occasion; and
FIG. 7 is a diagram illustrating a correspondence between a PUSCH occasion and a preamble.

### DETAILED DESCRIPTION

The present invention will be described in detail below with reference to the accompanying drawings and specific embodiments. It should be noted that the present invention should not be limited to the specific embodiments described below. In addition, for the sake of brevity, detailed descriptions of well-known technologies that are not directly associated with the present invention are omitted to prevent confusion in the understanding of the present invention.

Before detailed description, terms mentioned in the present invention are illustrated first as follows. Unless otherwise specified, the terms involved in the present invention have the following meanings.
UE: User Equipment
NR: New Radio
LTE: Long Term Evolution
eLTE: Enhanced Long Term Evolution
RRC: Radio Resource Control (layer)
MAC: Medium Access Control (layer)
MAC CE: MAC Control Element
MAC PDU: MAC Protocol Data Unit
MSG 3: Message 3
PRACH: Physical Random Access Channel
PUSCH: Physical Uplink Shared Channel
CCCH: Common Control Channel
UL grant: Uplink grant
C-RNTI: Cell Radio Network Temporary Identifier
RA: Random Access
RAR: Random Access Response

In the following, a plurality of implementation manners according to the present invention are described in detail by using an NR mobile communication system and subsequent evolved versions thereof as an example application environment, and using NR-supporting base stations and UE devices as examples. However, it should be pointed out that the present invention is not limited to the following implementation manners, but can be applied to more other radio communication systems such as eLTE communication systems, and can also be applied to other base stations and UE devices such as eLTE-supporting base stations and UE devices.

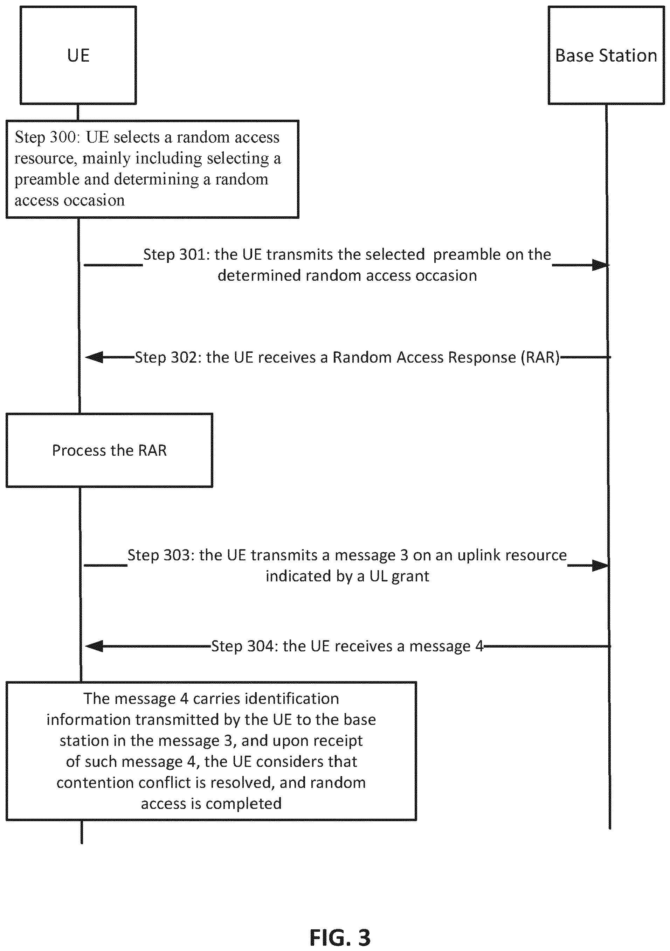

Firstly, a four-step random access procedure in the prior art will be described below on the basis of FIG. 3. As shown in FIG. 3, the 4-step random access procedure executed by UE generally includes the following steps.

Step 300: UE selects a random access resource used for random access. In this step,
- the UE selects a preamble for transmission, and sets an index ID corresponding to the selected preamble to be the value of a parameter PREAMBLE_INDEX; and
- the next PRACH occasion available for transmission is determined from a plurality of PRACH occasions.

Step 301: the UE transmits the selected preamble on the determined PRACH occasion.

Step 302: the UE receives a Random Access Response (RAR) transmitted from a base station side.

If this RAR carries the index ID corresponding to the preamble transmitted by the UE in step 1, then the UE can determine that the RAR is transmitted to the UE. A UL grant is carried in such RAR. This UL grant indicates a PUSCH resource used for transmitting a message 3.

After receiving the above RAR, the UE processes the UL grant carried in the RAR, and indicates the same to a lower layer. If it is the first time that the UE has successfully received the above RAR, then the UE obtains, from a multiplexing and assembly entity, a MAC PDU used for transmission, and stores the same in a message 3 buffer (MSG 3 buffer).

Step 303: the UE transmits the message 3 on the PUSCH resource indicated by the UL grant.

The UE carries, in this message 3, identification information used for contention conflict resolution.

Step 304: the UE receives a message 4 transmitted from the base station side.

If the message 4 carries the identification information carried by the UE in the message 3, then the UE considers that contention conflict is resolved, and the random access procedure is successfully completed.

In the above random access procedure, the UE executes steps 1-4 to perform message transmission, and therefore the random access procedure is referred to as a "four-step random access" (4-step RA) procedure.

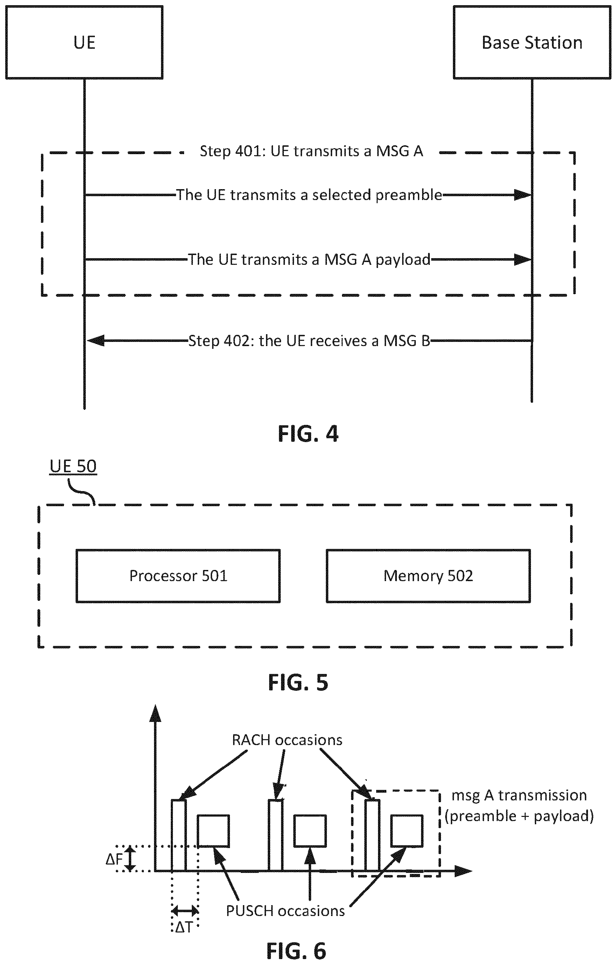

In order to reduce the time required for random access, a "two-step random access" (2-step RA) procedure is currently under discussion. The "two-step random access procedure" involved in the present invention will be described in detail on the basis of FIG. 4. The "two-step random access procedure" in the present invention generally includes the following steps.

Step 401: UE transmits a message A to a base station.

The message A includes a preamble and a message A payload.

The preamble is transmitted on a PRACH, and the message A payload is transmitted on a PUSCH. The message A payload is packaged into a MAC PDU, and is transmitted on the PUSCH. The message A payload can carry an RRC message such as an RRC connection establishment request message, and can also carry a user data packet.

Step 402: the UE receives a message B transmitted by the base station.

The message B carries information used for contention conflict resolution.

In chronological order, the UE firstly transmits the MSG A, the transmission including transmitting the preamble and transmitting the message A payload, and then the UE receives the message B transmitted by the base station. The message B is response information to the MSG A transmitted from a network side/the base station to the UE.

In addition, when the UE determines a transmission occasion available to the message A, the UE obtains, from the multiplexing and assembly entity, the MAC PDU used for transmission, and stores the obtained MAC PDU in a buffer.

Since the message A includes the preamble transmitted on the PRACH and message A payload information transmitted on the PUSCH, the above transmission occasion available to the message A includes, for example, the following: the UE determines a PUSCH occasion available for transmitting the message A payload; or the UE determines the next available PRACH occasion, wherein the PRACH occasion is used for transmitting the above preamble; or the UE selects one of the preambles, and the selected preamble is used for a current random access procedure; or the preamble selected by the UE is associated with the PUSCH or the PUSCH occasion.

Furthermore, FIG. 5 is a block diagram illustrating the user equipment (UE) involved in the present invention. As shown in FIG. 5, the user equipment (UE) 50 includes a processor 501 and a memory 502. The processor 501 may include, for example, a microprocessor, a microcontroller, an embedded processor, etc. The memory 502 may include, for example, a volatile memory (such as a Random Access Memory (RAM)), a Hard Disk Drive (HDD), a non-volatile memory (such as a flash memory), or other memory. The memory 502 stores program instructions. When run by the processor 501, the instructions can execute the random access method described in detail in the present invention.

Specific embodiments involved in the present invention will be described in detail below. In addition, as described above, the examples and embodiments in the present disclosure are illustrative descriptions for easy understanding of the present invention, and are not intended to limit the present invention.

### Embodiment 1

During a 2-step random access procedure executed by UE, in order to transmit a message A, the UE firstly needs to determine an occasion for transmitting the message A.

When the UE determines/selects an occasion available for transmitting the message A, the UE obtains, from a multiplexing and assembly entity, a MAC PDU used for transmission, and stores the same in a buffer. The buffer may be a message 3 buffer in the prior art, may also be a new buffer different from the message 3 buffer, and may be referred to as a MSG A buffer or a MSG A payload buffer.

Optionally, only if the occasion is the first/new transmission occasion for the message A determined by the UE in this random access procedure, or only if this determined occasion is used for the first/new transmission of the MSG A, then does the UE execute this step in which the UE obtains, from a multiplexing and assembly entity, a MAC PDU used for transmission, and stores the same in a buffer.

In addition, optionally, if the transmission of the MSG A payload (or the MSG A) is unrelated to a common control channel, or if the transmission of the MSG A payload (or the MSG A) is not performed for a logical channel having a logical channel type of a Common Control Channel (CCCH), then the UE instructs the multiplexing and assembly entity to include a C-RNTI MAC CE in the next transmission. Here, the C-RNTI MAC CE is a MAC CE having a value being a C-RNTI of the UE.

Optionally, when the UE determines an occasion available for transmitting the message A, the UE can consider a PUSCH occasion included in the occasion to be a UL grant, process this UL grant, and optionally indicate the same to a lower layer.

The message A includes a preamble and message A payload information. The preamble is transmitted on a PRACH, and the message A payload information is transmitted on a PUSCH. Therefore, the "determining a transmission occasion for the message A" may be determining a PUSCH occasion available for transmitting the message A payload information.

On this basis, an implementation manner of the foregoing embodiment can be implemented in the following manner.

When the UE determines/selects a PUSCH occasion available for transmitting the message A payload information, the UE obtains, from a multiplexing and assembly entity, a MAC PDU used for transmission, and stores the same in a buffer. The buffer may be a message 3 buffer in the prior art, may also be a new buffer different from the message 3 buffer, and may be referred to as a MSG A buffer or a MSG A payload buffer.

Optionally, only if the occasion is the first/new PUSCH occasion determined by the UE in this random access procedure, or only if this determined PUSCH occasion is used for the first/new transmission of the MSG A payload (MSG A), then does the UE execute this step in which the UE obtains, from a multiplexing and assembly entity, a MAC PDU used for transmission, and stores the same in a buffer.

In addition, optionally, if the transmission of the MSG A payload (or the MSG A) is unrelated to a common control channel, or if the transmission of the MSG A payload (or the MSG A) is not performed for a logical channel having a logical channel type of a Common Control Channel (CCCH), then the UE instructs the multiplexing and assembly entity to include a C-RNTI MAC CE in the next transmission. Here, the C-RNTI MAC CE is a MAC CE having a value being a C-RNTI of the UE.

Optionally, when the UE determines a PUSCH occasion available for transmission, the UE can consider the PUSCH occasion to be a UL grant, process this UL grant, and optionally indicate the same to a lower layer.

In the above procedure, "the UE determines/selects a PUSCH occasion available for transmission" may specifically be, for example, as in embodiment 2 described below, that the UE determines a PUSCH occasion on the basis of an available PRACH occasion selected by the UE, or may also be, as in embodiment 3 described below, that the UE determines a PUSCH occasion on the basis of a preamble selected by the UE, or may be that the UE determines a PUSCH occasion on the basis of a combination of the selected PRACH occasion and the selected preamble.

### Embodiment 2

In embodiment 2, the following situation is considered, that is, as shown in FIG. 6, a one-to-one correspondence between PRACH occasions and PUSCH occasions exists. Here, the PRACH refers to a PRACH used for transmitting a preamble of a message A, and the PUSCH refers to a PUSCH used for transmitting message A payload information.

The UE can obtain this correspondence according to pre-configured information. For example, a base station/network side is configured with time and frequency domain information of a PRACH resource in system information. According to this information, the UE can determine each PRACH occasion. In addition, the base station/network side is further configured with a frequency offset and/or a time offset of each PUSCH occasion relative to a PRACH occasion corresponding thereto, and can notify the UE of the same by means of broadcasting. Therefore, when the UE determines the next PRACH occasion available for transmission, the UE can determine the next PUSCH occasion available for transmission according to the time and frequency information of the PRACH occasion in combination with the pre-configured frequency offset and time offset.

Therefore, on the basis of the above situation considered in embodiment 2, changes or adjustments can be made to embodiment 1 so as to obtain the following implementation manner.

When the UE determines the next available PRACH occasion, the PRACH occasion being used for transmitting the preamble in the message A, the UE obtains, from a multiplexing and assembly entity, a MAC PDU used for transmission, and stores the same in a buffer.

The buffer may be a message 3 buffer in the prior art, may also be a new buffer different from the message 3 buffer, and may be referred to as a MSG A buffer or a MSG A payload buffer.

Optionally, only if the occasion is the first/new PRACH occasion determined by the UE in this random access procedure, or only if a PUSCH occasion associated with the determined PRACH occasion is used for the first/new transmission of the MSG A payload (MSG A), then does the UE execute this step in which the UE obtains, from a multiplexing and assembly entity, a MAC PDU used for transmission, and stores the same in a buffer.

Optionally, if the transmission of the MSG A payload (or the MSG A) is unrelated to a common control channel, or if the transmission of the MSG A payload (or the MSG A) is not performed for a logical channel having a logical channel type of a Common Control Channel (CCCH), then the UE instructs the multiplexing and assembly entity to include a C-RNTI MAC CE in the next transmission.

Optionally, when the UE determines the next available PRACH occasion, the UE can consider the PUSCH occasion associated with the PRACH occasion to be a UL grant, process this UL grant, and optionally indicate the same to a lower layer.

### Embodiment 3

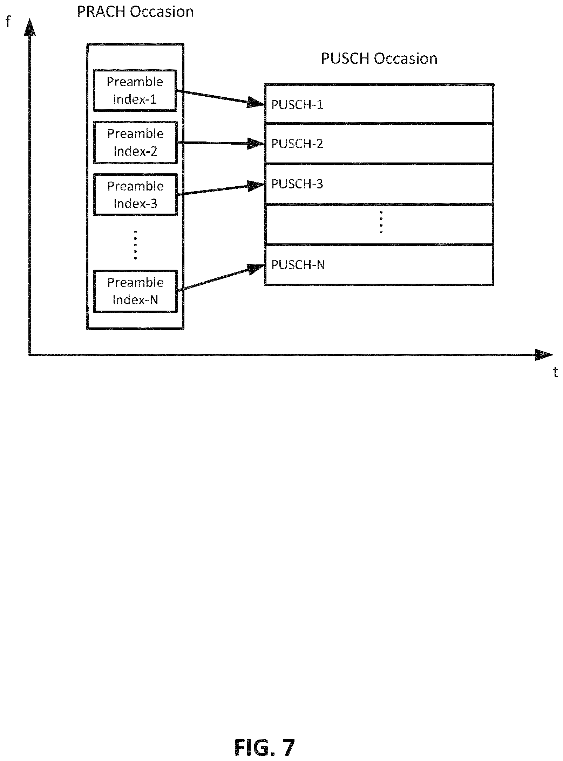

In embodiment 3, the following situation is further considered, that is, as shown in FIG. 7, in addition to that a PUSCH occasion corresponds to a PRACH occasion (such as the above situation in embodiment 2), a one-to-one correspondence between PUSCH occasions and preambles further exists.

That is, one PRACH occasion corresponds to a plurality of PUSCH occasions (or a PUSCH occasion group), and the PUSCH occasions respectively correspond to the preambles in a one-to-one manner. Here, the PUSCH occasion group corresponding to one PRACH occasion is referred to as a PUSCH resource.

In this case, the UE can use the method described in the embodiment to firstly determine an available PUSCH occasion group according to a determined next available PRACH occasion and then determine, according to a selected preamble, a PUSCH occasion in the available PUSCH occasion group that can be used by the UE to transmit a MSG A payload.

Specifically, the PUSCH occasions in the PUSCH occasion group may be numbered, or the PUSCH occasions may be sorted in an ascending order (from low to high or from small to large) and numbered according to a starting position of time or frequency of a PUSCH resource in which each PUSCH occasion is located.

In addition, all of preambles available for determining the PUSCH occasion group and transmitted on the PRACH occasions are arranged in an ascending order according to respective values of index IDs.

Each preamble index may correspond to a corresponding PUSCH occasion group number, so that the UE can determine, by determining a preamble, a PUSCH occasion available for transmitting the MSG A payload.

On the basis of the above situation considered in embodiment 3, changes or adjustments can be made to embodiment 1 so as to obtain the following possible implementation manner.

When the UE selects a preamble, particularly, if this preamble is used for a 2-step RA procedure, or if the preamble selected by the UE corresponds to/is associated with a PUSCH (or is associated with a PUSCH occasion), then the UE obtains, from a multiplexing and assembly entity, a MAC PDU used for transmission, and stores the same in a buffer.

The buffer may be a message 3 buffer in the prior art, may also be a new buffer different from the message 3 buffer, and may be referred to as a MSG A buffer or a MSG A payload buffer.

Optionally, only if it is the first time that the UE selects a preamble in this random access procedure, or only if a PUSCH occasion associated with the selected preamble is used for the first/new transmission of the MSG A payload (MSG A), then does the UE execute this step in which the UE obtains, from a multiplexing and assembly entity, a MAC PDU used for transmission, and stores the same in a buffer.

Optionally, if the transmission of the MSG A payload (or the MSG A) is unrelated to a common control channel, or if the transmission of the MSG A payload (or the MSG A) is not performed for a logical channel having a logical channel type of a Common Control Channel (CCCH), then the UE instructs the multiplexing and assembly entity to include a C-RNTI MAC CE in the next transmission.

In addition, optionally, when the UE selects a preamble, particularly, if this preamble is used for a 2-step RA procedure, or if the preamble selected by the UE corresponds to/is associated with a PUSCH (or is associated with a PUSCH occasion), then the UE can consider the PUSCH occasion associated with the preamble to be a UL grant, process this UL grant, and optionally indicate the same to a lower layer.

Further, another implementation of the above solution may be performed after the UE instructs a physical layer to transmit the preamble on the selected PRACH occasion.

For example, the UE instructs the physical layer to transmit the preamble on the selected PRACH occasion.

If the preamble transmitted by the UE is used for a 2-step RA procedure, or if the transmitted preamble corresponds to/is associated with a PUSCH (or is associated with a PUSCH occasion), or if a PRACH occasion used for transmitting the preamble corresponds to/is associated with a PUSCH (or is associated with a PUSCH occasion), then the UE obtains, from a multiplexing and assembly entity, a MAC PDU used for transmission, and stores the same in a buffer.

The buffer may be a message 3 buffer in the prior art, may also be a new buffer different from the message 3 buffer, and may be referred to as a MSG A buffer or a MSG A payload buffer.

Optionally, only if it is the first time that the UE transmits a preamble in this random access procedure, or only if a PUSCH occasion associated with the transmitted preamble or a PUSCH occasion associated with this PRACH occasion used for transmitting the preamble is used for the first/new transmission of the MSG A payload (MSG A), then does the UE execute this step in which the UE obtains, from a multiplexing and assembly entity, a MAC PDU used for transmission, and stores the same in a buffer.

Optionally, if the transmission of the MSG A payload (or the MSG A) is unrelated to a common control channel, or if the transmission of the MSG A payload (or the MSG A) is not performed for a logical channel having a logical channel type of a Common Control Channel (CCCH), then the UE instructs the multiplexing and assembly entity to include a C-RNTI MAC CE in the next transmission.

In addition, optionally, if the preamble transmitted by the UE is used for a 2-step RA procedure, or if the transmitted preamble corresponds to/is associated with a PUSCH (or is associated with a PUSCH occasion), or if the PRACH occasion used for transmitting the preamble corresponds to/is associated with a PUSCH (or is associated with a PUSCH occasion), then the UE can consider the PUSCH occasion associated with the preamble to be a UL grant, process this UL grant, and optionally indicate the same to a lower layer.

### Embodiment 4

Embodiment 4 according to the present invention will be described below.

In embodiments 1-3, if the UE obtains, from a multiplexing and assembly entity, a MAC PDU used for transmission, and stores the same in a MSG 3 buffer:

in this case, when the UE receives a UL grant, if this UL grant is used for 2-step RA, or if this UL grant is used for transmission of a MSG A payload, or if this UL grant is related to 2-step RA, then the UE can obtain the MAC PDU from the MSG 3 buffer, and transmit the same.

When the UE receives a UL grant in an RAR, the UE obtains the MAC PDU from the MSG 3 buffer, and transmits the same.

Particularly, after obtaining the MAC PDU used for transmission, the UE delivers the MAC PDU and the UL grant to a HARQ process corresponding thereto, and instructs the HARQ process to initiate a new transmission of a transport block. This transport block carries the foregoing MAC PDU. Correspondingly, upon receipt of a request for a new transmission of a certain transport block, the HARQ process stores a MAC PDU corresponding to the transport block in an HARQ buffer, this HARQ buffer being corresponding to/belonging to the HARQ process; and stores a received UL grant. Then the HARQ process instructs the physical layer/lower layer to transmit the transport block on the stored UL grant.

Alternatively, in embodiments 1-3, if the UE obtains, from a multiplexing and assembly entity, a MAC PDU used for transmission, and stores the same in a buffer used as a non-MSG 3 buffer or referred to as a MSG A buffer:

in this case, when the UE receives a UL grant, if this UL grant is used for 2-step RA, or if this UL grant is used for transmission of a MSG A payload, or if this UL grant is related to 2-step RA, then the UE can obtain the MAC PDU from the MSG A buffer, and transmit the same.

When the UE receives a UL grant in an RAR, the UE obtains the MAC PDU from the MSG 3 buffer, and transmits the same.

Particularly, after obtaining the MAC PDU used for transmission, the UE delivers the MAC PDU and the UL grant to a HARQ process corresponding thereto, and instructs the HARQ process to initiate a new transmission of a transport block. This transport block carries the foregoing MAC PDU. Correspondingly, upon receipt of a request for a new transmission of a certain transport block, the HARQ process stores a MAC PDU corresponding to the transport block in an HARQ buffer, this HARQ buffer being corresponding to/belonging to the HARQ process; and stores a received UL grant. Then the HARQ process instructs the physical layer/lower layer to transmit the transport block on the stored UL grant.

The program running in the device according to the present invention may be a program that enables a computer to implement the functions of the embodiments of the present invention by controlling a central processing unit (CPU). The program or information processed by the program may be temporarily stored in a volatile memory (such as a Random Access Memory (RAM)), a Hard Disk Drive (HDD), a non-volatile memory (such as a flash memory), or another memory system.

Programs for fulfilling the functions of the various embodiments of the present invention may be recorded in a computer-readable recording medium. Corresponding functions may be fulfilled by causing a computer system to read the programs recorded in the recording medium and execute these programs. The so-called "computer system" here may be a computer system embedded in the device, and may include an operating system or hardware (such as peripheral devices). The "computer-readable recording medium" may be a semiconductor recording medium, an optical recording medium, a magnetic recording medium, a recording medium storing a program dynamically for a short time, or any other recording medium readable by a computer.

Various features or functional modules of the devices used in the above embodiments may be implemented or executed by circuits (such as single-chip or multi-chip integrated circuits). Circuits designed to execute the functions described in this specification may include a general-purpose processor, a Digital Signal Processor (DSP), an Application-Specific Integrated Circuit (ASIC), a Field Programmable Gate Array (FPGA), or another programmable logic device, a discrete gate or transistor logic, a discrete hardware component, or any combination of the above devices. The general-purpose processor may be a microprocessor, or any existing processor, controller, microcontroller, or state machine. The above circuit may be a digital circuit or an analog circuit. In the case of new integrated circuit technologies that replace existing integrated circuits because of advancements in the semiconductor technologies, one or a plurality of embodiments of the present invention may also be implemented using these new integrated circuit technologies.

In addition, the present invention is not limited to the above embodiments. Various examples of the embodiments have been described; however, the present invention is not limited thereto. Fixed or non-mobile electronic devices mounted indoors or outdoors may be used as terminal devices or communication devices, such as AV devices, kitchen devices, cleaning devices, air conditioners, office devices, vending machines, and other household appliances.

As described above, the embodiments of the present invention have been described in detail with reference to the accompanying drawings. However, the specific structure is not limited to the above embodiments, and the present invention also includes any design changes that do not deviate from the gist of the present invention. In addition, various modifications may be made to the present invention within the scope of the claims, and embodiments obtained by appropriately combining the technical means disclosed in different embodiments are also included in the technical scope of the present invention. In addition, the components having the same effects described in the above embodiments may be substituted for each other.

## Claims

1. A random access method, comprising:
transmitting, by user equipment (UE), a message A to a base station, wherein the message A comprises a preamble and a message A payload; and
after completing transmission of the message A, receiving, by the UE, a message B transmitted by the base station as a response message to the message A,
wherein the preamble is transmitted on a Physical Random Access Channel (PRACH); the message A payload is packaged into a Medium Access Control Protocol Data Unit (MAC PDU), and is transmitted on a Physical Uplink Shared Channel (PUSCH); and
when the UE determines a transmission occasion available to the message A, the UE obtains, from a multiplexing and assembly entity, the MAC PDU used for transmission, and stores the MAC PDU in a buffer.

2. The random access method according to claim 1, wherein
determining, by the UE, a transmission occasion available to the message A comprises:
determining, by the UE, a PUSCH occasion available for transmitting the message A payload;
or determining, by the UE, the next available PRACH occasion, the PRACH occasion being used for transmitting the preamble;
or selecting, by the UE, one of the preambles, the selected preamble being used for a current random access procedure;
or the preamble selected by the UE being associated with the PUSCH or the PUSCH occasion.

3. The random access method according to claim 2, wherein
if the UE determines a PUSCH occasion available for transmission, and
if the determined PUSCH occasion is the first PUSCH occasion determined by the UE in the current random access procedure, or if the determined PUSCH occasion is used for a new transmission of the message A payload,
then the UE obtains, from the multiplexing and assembly entity, the MAC PDU used for transmission.

4. The random access method according to claim 2, wherein
if the UE determines the next available PRACH occasion, and
if the determined PRACH occasion is the first PRACH occasion determined by the UE in the current random access procedure, or if a PUSCH occasion associated with the determined PRACH occasion is used for a new transmission of the message A payload,
then the UE obtains, from the multiplexing and assembly entity, the MAC PDU used for transmission.

5. The random access method according to claim 2, wherein
if the UE selects one of the preambles, and
if the selected preamble is the first preamble selected in the current random access procedure, or if a PUSCH occasion associated with the selected preamble is used for a new transmission of the message A payload,
then the UE obtains, from the multiplexing and assembly entity, the MAC PDU used for transmission.

6. The random access method according to claim 2, wherein
the UE instructs a physical layer to transmit the preamble on the selected PRACH occasion, and
if the preamble transmitted by the UE is used for the current random access procedure, or if the preamble transmitted by the UE is associated with a PUSCH, or if the PRACH occasion used for transmitting the preamble is associated with a PUSCH, then the UE obtains, from the multiplexing and assembly entity, the MAC PDU used for transmission.

7. The random access method according to claim 2, wherein
if the UE determines a PUSCH occasion available for transmission, then the UE uses the PUSCH occasion as an uplink grant (UL grant), and processes the UL grant;
if the UE determines the next available PRACH occasion, then the UE uses a PUSCH occasion associated with the PRACH occasion as an uplink grant (UL grant), and processes the UL grant; and
if the UE selects one of the preambles and the selected preamble is used for the current random access procedure, or if the preamble selected by the UE is associated with the PUSCH or the PUSCH occasion, then the UE uses the PUSCH occasion associated with the preamble as an uplink grant (UL grant), and processes the UL grant.

8. The random access method according to any one of claims 1-7, wherein
if the transmission of the message A payload or the transmission of the message A is unrelated to a Common Control Channel (CCCH), or if the transmission of the message A payload or the transmission of the message A is not performed for a logical channel having a logical channel type of a Common Control Channel (CCCH),
then the UE instructs the multiplexing and assembly entity to include a C-RNTI MAC CE in the next transmission.

9. The random access method according to any one of claims 1-7, wherein
the UE stores the MAC PDU in a message 3 buffer or in a buffer used as a non-message 3 buffer;
when the UE receives an uplink grant (UL grant), if the UL grant is used for the current random access procedure, or if the UL grant is used for the transmission of the message A payload, or if the UL grant is related to the current random access procedure, then the UE obtains the MAC PDU from the buffer in which the MAC PDU is stored, and transmits the same; and
when the UE receives an uplink grant (UL grant) in a Random Access Response (RAR), the UE obtains the MAC PDU from the buffer in which the MAC PDU is stored, and transmits the same.

10. User equipment (UE), comprising:
a processor; and
a memory, storing instructions,
wherein when run by the processor, the instructions execute the random access method according to any one of claims 1 to 9.
